# EUROPEAN PATENT SPECIFICATION

(11) **EP 1 929 817 B1**
(45) Date of publication and mention of the grant of the patent: **07.04.2010**
(21) Application number: 06779599.7
(22) Date of filing: 18.08.2006
(51) Int. Cl.: H04W 4/10

(54) **METHOD OF ENHANCING VOICE COMMUNICATION BETWEEN A GROUP OF USERS IN A NETWORK**
VERFAHREN ZUR VERBESSERUNG DER SPRACHKOMMUNIKATION ZWISCHEN EINER GRUPPE VON BENUTZERN IN EINEM NETZ
PROCEDE PERMETTANT D'AMELIORER LA COMMUNICATION VOCALE ENTRE UN GROUPE D'UTILISATEURS DANS UN RESEAU

(30) Priority: 23.08.2005 GB 0517165
(43) Date of publication of application: 11.06.2008
(73) Proprietor: Nokia Siemens Networks GmbH & Co. KG, 81541 München (DE)
(72) Inventor: ISAACS, Kenneth, Salisbury Wiltshire SP1 3FW (GB)
(74) Representative: Bruglachner, Thomas E.
(86) International application number: PCT/GB2006/050245
(87) International publication number: WO 2007/023311

(56) References cited:
- EP-A- 1 734 772
- WO-A-2005/055631
- WO-A-2005/055632
- US-A1- 2004 077 358
- "3rd Generation Partnership Project; Technical Specification Group Core Network and Terminals; Voice Group Call Service (VGCS); Stage 2, (Release 7)" June 2005 (2005-06), 3GPP TS 43.068 V7.0.0, XX, XX, PAGE(S) COMPLETE , XP002366796 paragraph [11.3.7.1] pages 44-50, paragraph 11.3.8 pages 71-73, paragraph 11.4

## Description

This invention relates to a method of enhancing voice communication between a group of users in a network, in particular for global system for mobile communication (GSM) based systems, such as GSM edge radio access network (GERAN).

GERAN includes a voice group service (VGCS) whereby multiple users can communicate. Whichever user has control of the uplink, blocks all other users from speaking. More recently, a change in the talker has been followed by an indication of who the party talking is. However, this enhancement requires additional signalling and there is a delay in providing the information to other members of the group. In addition, the identity information is provided by stealing frames from the voice channel, which can have an impact on voice quality for the call, under certain circumstances.

WO2005/055632 discloses a method and system for providing the active members of a Voice Group Call Service with additional information. The additional information is transmitted in a message on the associated control channel for the downlink traffic channel of the voice group simultaneously with a voice call.

US2004/077358 discloses Methods and systems for distributed arbitration in a push-to-talk communications system. User communications terminals execute a distributed arbitration algorithm to determine which terminal should have possession of a communications channel among terminals with simultaneously pending talk requests. A server may notify the terminals of the identification of a terminal that is using the communications channel.

*"3GPP; Technical Specification Group Core Network and Terminals; VGCS; Stage 2 (Rel. 7)*", June 2005 discloses a system in which additional information about a new talker is sent in "VGCS_ADD_INFO" messages between an MSC and a BSC, and between a BSC and several listeners. It also mentions that "UPLINK FREE" and "UPLINK BUSY" messages can be sent by a BSC to mobile stations, to indicate whether an uplink channel is free or busy.

EP1734772 is prior art under Article 54(3) EPC, and discloses method of uplink preemption by UEs later entering a trunking group with an established group call. It teaches "UPLINK FREE" and "UPLINK BUSY" messages being sent to user equipment to notify them of the status of an uplink channel.

In accordance with the present invention, a method of enhancing communication between a group of users in a network voice within a voice group call service is provided, as defined in claim 1.

A second aspect of the present invention provides a base station as defined in Claim 7.

In the present invention, talker identity is combined with other data which is already sent and is transmitted in an existing message with the other data.

Preferably, the data and identifier are transmitted in an existing message.

Preferably, the identifier is transmitted across a network to base station interface.

Preferably, the interface is between a mobile switching centre and a base station controller.

Preferably, the data and identifier are transmitted across an air interface between a base station and the users.

Preferably, the data and identifier are contained within one radio block on the air interface.

Preferably, the existing message is an uplink busy message.

Preferably, the mobile terminal is one of a mobile telephone, a personal digital assistant, or a personal computer.

Preferably, the identifier is a pre-allocated talker identifier.

Preferably, the information appears on a visual display of the other users.

Preferably, the network is a mobile communication network.

Although, various type of communication network could make use of the method of the present invention, preferably, the mobile communication network is a global system for mobile communication network.

A method of enhancing voice communication between a group of users in a network according to the present invention will now be described with reference to the accompanying drawings in which:
Figure 1 is a block diagram of a system for carrying out the method of the present invention;
Figure 2 illustrates conventional signalling information for a voice group call where the uplink access is issued in a cell where the parented BSS is connected to the Anchor MSC (MSC-A); and,
Figure 3 illustrates signalling information for a voice group call in accordance with the present invention.

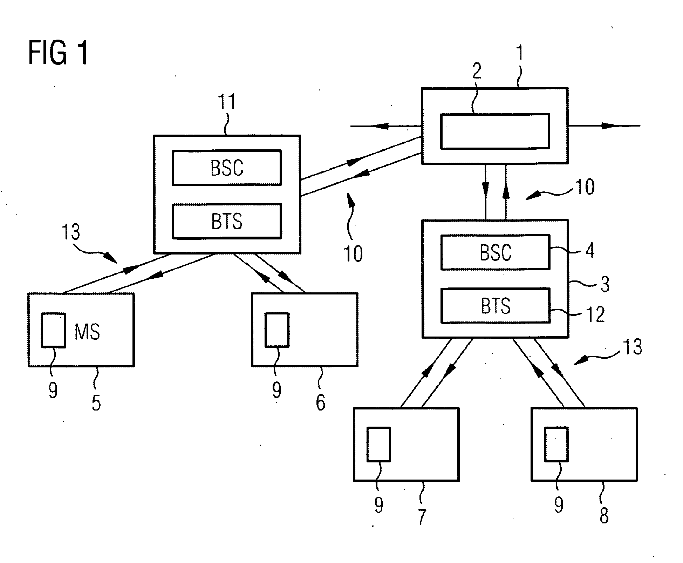

Figure 1 illustrates a system in which the method of the present invention is carried out. A network 1 communicates with mobile devices (MS) 5,6,7,8 via different base stations according to the position of the mobile device. In this example a first base station sub-system (BSS) 3 is shown, with two MSs 7, 8 within ranges of this base station. A second BSS 11, communicates with two other MSs 5, 6. Two way communication is possible over an interface 10 between a mobile switching centre (MSC) 2 in the network and a base station controller (BSC) 4 in each base station subsystem (BSS) 3, 11 The BSS is made up of the BSC 4 and a number of base station transceivers (BTS) 12. The BSC connects to the MSC and the BTS provides a radio interface to the MS. The base station controller 4 and mobile devices 7, 8 communicate via the BTS over an air interface 13. Each mobile device is provided with a display 9.

Within the GERAN standardisation process various enhancements for a voice group service (VGCS) have been proposed. A feature of these enhancements is provision of talker identity information in a message called VGCS additional information. This feature provides the identity of the talker to the current listeners of the voice group call, within the VGCS additional information message. As required by the standard, the VGCS additional information is sent on an air interface on two logical channels, a fast associated control channel (FACCH) and a slow associated control channel (SACCH).

The VGCS additional information message is transmitted once on the downlink FACCH and periodically on the downlink SACCH, so that late joiners are provided with the identity of the current talker. The transmission of messages on the FACCH steals speech frames, thus these transmissions have an impact on voice quality.

In the voice group call service only one service subscriber has access to talk at any one time. In order for the network to control access to talk in the group call, the network transmits status messages on the downlink of the voice group channel to indicate whether the uplink is free or busy, using an UPLINK FREE and an UPLINK BUSY message respectively. If the uplink is busy, then the network may also indicate a priority of a call that is using the uplink. Both the UPLINK FREE and UPLINK BUSY messages are sent on the FACCH of the voice group channel. Thus, the transmission of the UPLINK BUSY has an impact on the voice quality of the speech received on the downlink of the voice group call channel.

Each UPLINK FREE and UPLINK BUSY message is contained within one radio block. Based on current performance, one radio block takes approximately 20ms to transmit and contains 184 bits of information, or 23 bytes. In the voice group call service, the talker typically talks on average for 5s. Thus, in this scenario, the transmission of the talker identity steals one block in 250, resulting in a frame erasure rate (FER) of 0.4%. If the UPLINK BUSY messages are transmitted every 5s, as currently proposed in the standards, then this results in a combined FER of 0.8%, assuming that 2 blocks are stolen in every 250. However, in a situation where both the UPLINK BUSY message and the talker identity are sent within the first second of the talker starting to talk, then 2 blocks are stolen in 50, resulting in a FER exceeding 2%, which may not be acceptable. The standard also requires that the VGCS additional information is sent in a separate message on an A-interface from the mobile switching centre to the base station controller. Sending of an UPLINK BUSY message by a BSS may be triggered as a result of the BSS receiving the following events, UPLINK ACCESS from the MS 5, 6, 7, 8 that originated the talker request, UPLINK SEIZED or UPLINK REJECT message from the MSC.

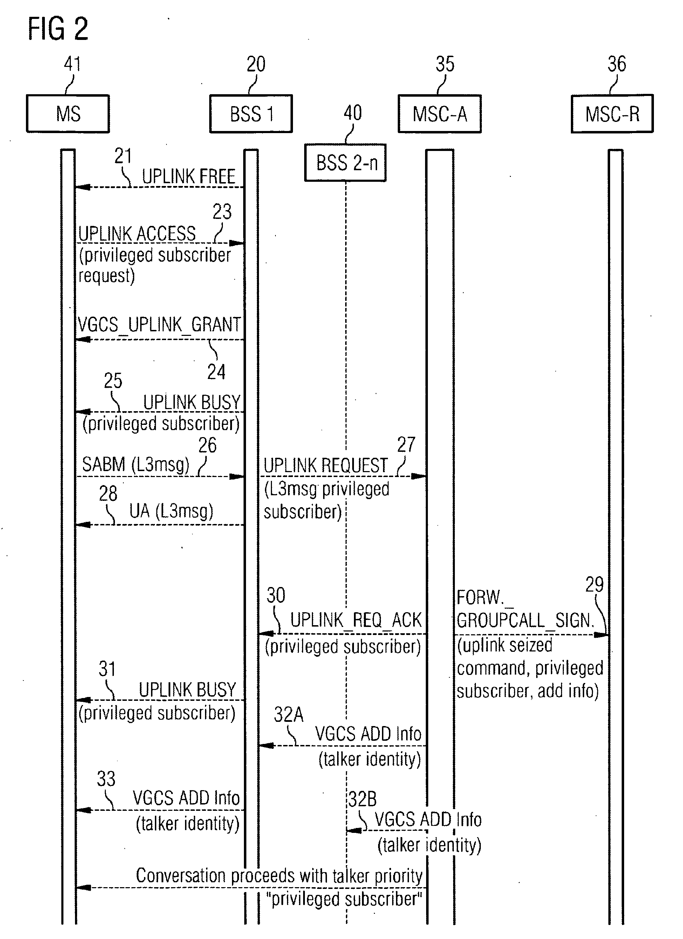

In Fig. 2, signalling information required for a voice group call uplink access in an anchor MSC (MSC-A) 35 with talker priority given to "privileged subscriber," in accordance with the current standardised solution for the transmission of the talker information, is illustrated. A first base station sub-system (BSS1) 20 sends an UPLINK FREE message 21 to a mobile station (MS) 41. The MS sends an UPLINK ACCESS request 23 for privileged subscriber to the BSS 20 which sends a VGCS UPLINK GRANT message 24 and an UPLINK BUSY message 25, for privileged subscriber, back to the MS. Further, UPLINK BUSY messages are sent in each of the cells that the BSS parents that are in the group call area. A set asynchronous balanced mode (SABM) start-up command 26 is sent from the MS to the BSS including a layer 3 message (L3msg), such as a talker indication message which contains the mobile's identity. The BSS replies with an unnumbered acknowledgement (UA) 28.

An UPLINK REQUEST 27 is sent to MSC-A 35 which may reply with an UPLINK REQUEST ACKNOWLEDGE 30 to the BSC that originated the uplink request and an UPLINK SEIZED command to each of the remaining connected BSCs (not shown) that are in the group call area The mobile device has sent its identifier, typically, IMSI, in the L3msg when establishing the signalling link on the air interface. The L3msg is then included in the UPLINK REQUEST message that is sent by the BSC to the mobile switching centre and the MSC-A checks a subscription for talker priority and retrieves additional information, such as a talker identifier from a visiting location register (not shown) which is what is sent to other members of the group. The sending of the Uplink Request 27 is delayed until the link on the air interface is established. The link is established by a SABM/UA exchange, the purpose of which is so that the identity of the MS can be obtained and included in the Uplink Request that is sent to the MSC.

The additional information, when present, is then transmitted 32A by MSC-A to the first BSS 20 and also transmitted 32B to each other connected BSC in the group call area. The BSS then transmits this information as a separate VGCS ADD info message 33 on the air interface.

MSC-A 35 sends a FORW._GROUP CALL_SIGN. message 29 to relay MSC (MSC-R) 36 including an uplink seized command, privileged subscriber data and the VGCS additional information The MSC-R then sends an UPLINK SEIZED 39B for privileged subscriber, to each connected BSS 40 in the group call area. The BSS receiving the UPLINK SEIZED command then forwards an UPLINK BUSY message 38 to each cell that it parents in the group call area for transmission on the group call channels. Further information is provided in a separate VGCS_ADD_INFO message from the MSC-R to each connected BSC in the group call area. The BSC then transmits this information as a separate VGCS ADD info message on the air interface. Typically, this information is talker identity, although it could equally be other information which the new talker wishes to share with all parties in the group, such as a location map for emergency services, or a geographical or person's name which might be difficult to understand and correctly record if given over air. The conversation within the group continues with the new active talker or privileged subscriber in control.

The need to provide information to the VGCS listeners regarding the identity of the current talker gives rise to a potentially unacceptable FER, which the present invention addresses. To reduce the impact on the voice quality as a result of the transmission of the talker identity information on the air interface, the present invention transmits this information within the UPLINK BUSY message. The UPLINK BUSY messages are periodically retransmitted on the downlink of the group channel. Sending of UPLINK BUSY messages may be triggered by the events as set out above. In order for the BSC to transmit the talker information in the UPLINK BUSY, either the MSC also includes the information in the UPLINK SEIZED, or the BSC delays sending the UPLINK BUSY until the VGCS additional information message is received from the MSC.

If this were done the other way around, with the UPLINK BUSY and VGCS additional information messages combined by including the contents of the UPLINK BUSY message within the VGCS additional information message, then legacy mobiles would be unable to receive an indication that the uplink is busy, which is not desirable.

Advantages of the present invention include reduction in FER, i.e. better speech quality than in the case when the invention is not used, and the feature that the MS receives the identity of the talker earlier. It will be received as soon as the MS identifies that the uplink is in use. Additionally, if the VGCS additional information is not sent as a separate message on the A-interface (BSS to MSC) then less signalling messages would be sent on this interface, which although not of noticeable gain to the user, reduces the signalling load within the network.

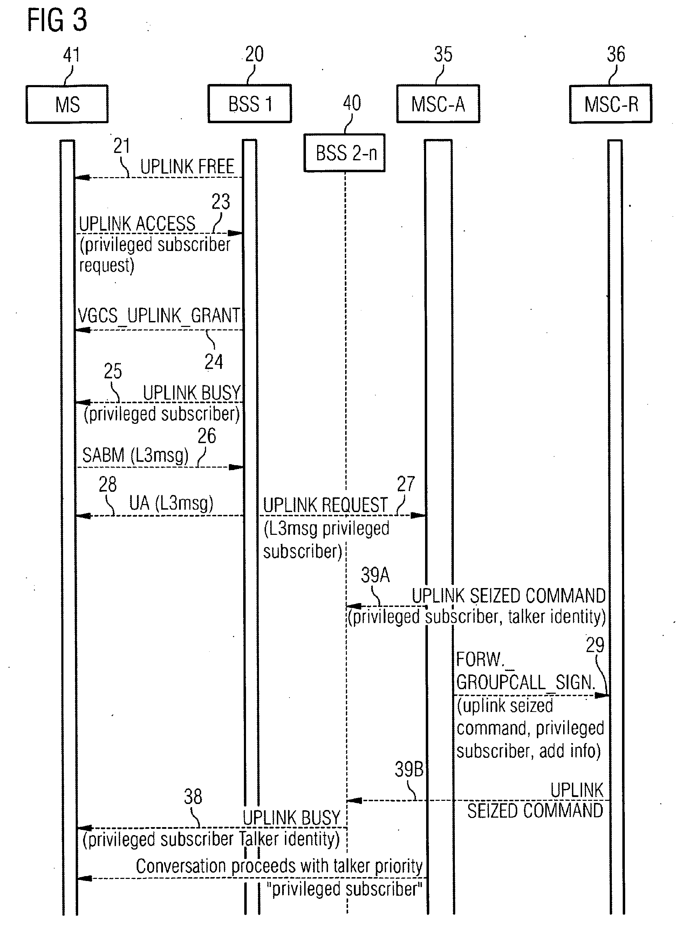

Fig. 3 shows signalling information required for a voice group call uplink access in the anchor MSC with talker priority "privileged subscriber" for the present invention, in which transmission of the VGCS additional information is merged into an existing message. The steps involved are similar to those in the conventional standardised mechanism of Fig. 2, up to the point of the UPLINK REQUEST 27. Instead of simply sending the UPLINK SEIZED message as before, the new UPLINK SEIZED message 39A now contains the talker identity which has been ascertained from a visiting location register and is sent on the A-interface between the MSC-A 35 and the BSC in each BSS 40. Similarly, the UPLINK BUSY message 38 on the air interface between the BSS 20 and MS 41 now contains the talker identity. Thus, the number of signalling messages required at this step is halved and the frame erasure rate is kept low, despite the addition of further information. The UPLINK SEIZED command may also be sent 39B from the MSC-R 36, as well as sent 39A from the MSC-A 35. This depends upon whether an MS in another part of the network with another MSC is connected to the voice group. Although the example of Fig. 3 shows only one MS connected to BSS1 20, this is to simplify the diagram and in practice there are usually multiple MSs connected to any BSS 20,40.

If the talker identifier found in the visiting location register is very long, it might exceed the available number of bytes in the UPLINK BUSY message. However, the configuration of the identifier is under the control of the operator who can choose to configure the talker identifier for each member of that group, so that it is made to fit within the available space.

The UPLINK BUSY message is repeated on the air interface, typically every 5 seconds. This is so that late joiners to the group channel are told that the UPLINK is in use. The UPLINK BUSY message can indicate the priority of the active member. However, as the message is sent in UNACKNOWLEDGED mode, other listeners who did not receive the message may just hear somebody else talking.

## Claims

1. A method of enhancing voice communication between a group of users in a network within a voice group call service, the method comprising:
providing data for transmission to the group of users, said data indicating that an uplink channel is busy;
**characterised in that** the method comprises:
adding to the data an identifier of a new active user (41); and
causing the identifier and the data indicating that the uplink channel is busy to be sent to the group of users (7, 8) within a single message (38) indicating that the uplink channel is busy.

2. A method according to claim 1, wherein the identifier and the data indicating that the uplink channel is busy are transmitted across an air interface (13) between a base station and the group of users (7, 8).

3. A method according to claim 2, wherein the identifier and the data indicating that the uplink channel is busy are contained within one radio block on the air interface (13).

4. A method according to any one of claims 1 to 4, comprising receiving a message (39A) comprising the identifier.

5. A method according to claim 4, wherein the receiving the message (39A) comprising the identifier comprises receiving the message (39A) comprising the identifier from a mobile switching centre (2, 35).

6. A method according to claim 4 or claim 5, wherein the message (39A) comprises a message indicating that the uplink channel is seized.

7. A base station (12), comprising:
means for providing data for transmission to a group of users (7, 8) in a network within a voice group call service, said data indicating that an uplink channel is busy;
**characterised in that** the base station (12) comprises:
means for adding to the data an identifier of a new active user (41); and
means for causing the identifier and the data indicating that the uplink channel is busy to be sent to the group of users (7, 8) within a single message (3 8) indicating that the uplink channel is busy.

8. A base station (12) according to claim 7, wherein the means for causing is arranged to cause the single message (38) to be sent across an air interface (13) between the base station (12) and the group of users (7, 8).

9. A base station (12) according to claim 8, wherein the means for causing is arranged to cause the single message (38) to be sent within one radio block on the air interface (13).

10. A base station (12) according to any one of claims 7 to 9, comprising means for receiving a message (39A) comprising the identifier.

11. A base station (12) according to claim 10, wherein the means for receiving a message (39A) comprising the identifier is arranged to receiving the message (39A) comprising the identifier from a mobile switching centre (2, 35).

12. A base station (12) according to claim 10 or claim 11, wherein the message (39A) comprises a message indicating that the uplink channel is seized.

## Patentansprüche

1. Verfahren zum Verbessern der Sprachkommunikation innerhalb einer Gruppe von Benutzern in einem Netz in einem Sprach-Gruppenanrufdienst, wobei das Verfahren Folgendes umfasst:
Bereitstellen von Daten zur Übertragung zu der Gruppe von Benutzern, wobei die Daten angeben, dass ein Aufwärtsstreckenkanal belegt ist;
**dadurch gekennzeichnet, dass** das Verfahren Folgendes umfasst:
Hinzufügen einer Kennung eines neuen aktiven Benutzers (41) zu den Daten; und
Bewirken, dass die Kennung und die Daten, die angeben, dass der Aufwärtsstreckenkanal belegt ist, in einer einzigen Nachricht (38), die angibt, dass der Aufwärtsstreckenkanal belegt ist, zu der Gruppe von Benutzern (7, 8) gesendet werden.

2. Verfahren nach Anspruch 1, wobei die Kennung und die Daten, die angeben, dass der Aufwärtsstreckenkanal belegt ist, über eine Funkschnittstelle (13) zwischen einer Basisstation und der Gruppe von Benutzern (7, 8) übertragen werden.

3. Verfahren nach Anspruch 2, wobei die Kennung und die Daten, die angeben, dass der Aufwärtsstreckenkanal belegt ist, in einem Funkblock auf der Funkschnittstelle (13) enthalten sind.

4. Verfahren nach einem der Ansprüche 1 bis 4, bei dem eine die Kennung umfassende Nachricht (39A) empfangen wird.

5. Verfahren nach Anspruch 4, wobei das Empfangen der die Kennung umfassenden Nachricht (39A) das Empfangen der die Kennung umfassenden Nachricht (39A) von einer Mobilvermittlungsstelle (2, 35) umfasst.

6. Verfahren nach Anspruch 4 oder Anspruch 5, wobei die Nachricht (39A) eine Nachricht umfasst, die angibt, dass der Aufwärtsstreckenkanal beansprucht ist.

7. Basisstation (12), umfassend:
ein Mittel zum Bereitstellen von Daten zur Übertragung zu einer Gruppe von Benutzern (7, 8) in einem Netz und einem sprach-Gruppenanrufdienst, wobei die Daten angeben, dass ein Aufwärtsstreckenkanal belegt ist;
**dadurch gekennzeichnet, dass** die Basisstation (12) Folgendes umfasst:
ein Mittel zum Hinzufügen einer Kennung eines neuen aktiven Benutzers (41) zu den Daten; und
ein Mittel zum Bewirken, dass die Kennung und die Daten, die angeben, dass der Aufwärtsstreckenkanal belegt ist, in einer einzigen Nachricht (38), die angibt, dass der Aufwärtsstreckenkanal belegt ist, zu der Gruppe von Benutzern (7, 8) gesendet werden.

8. Basisstation (12) nach Anspruch 7, wobei das Mittel zum Bewirken dafür ausgelegt ist, zu bewirken, dass die einzige Nachricht (38) über eine Funkschnittstelle (13) zwischen der Basisstation (12) und der Gruppe von Benutzern (7, 8) gesendet wird.

9. Basisstation (12) nach Anspruch 8, wobei das Mittel zum Bewirken dafür ausgelegt ist, zu bewirken, dass die einzige Nachricht (38) in einem Funkblock auf der Funkschnittstelle (13) gesendet wird.

10. Basisstation (12) nach einem der Ansprüche 7 bis 9 mit einem Mittel zum Empfangen einer die Kennung umfassenden Nachricht (39A).

11. Basisstation (12) nach Anspruch 10, wobei das Mittel zum Empfangen einer die Kennung umfassenden Nachricht (39A) dafür ausgelegt ist, die die Kennung umfassende Nachricht (39A) von einer Mobilvermittlungsstelle (2, 35) zu empfangen.

12. Basisstation (12) nach Anspruch 10 oder Anspruch 11, wobei die Nachricht (39A) eine Nachricht umfasst, die angibt, dass der Aufwärtsstreckenkanal beansprucht ist.

## Revendications

1. Procédé d'amélioration de communication vocale entre un groupe d'utilisateurs dans un réseau au sein d'un service d'appel vocal de groupe, le procédé comprenant :
délivrer des données pour une transmission au groupe d'utilisateurs, lesdites données indiquant qu'un canal montant est occupé ;
**caractérisé en ce que** le procédé comprend :
ajouter aux données un identifiant d'un nouvel utilisateur actif (41) ; et
faire en sorte que l'identifiant et les données indiquant que le canal montant est occupé soient envoyés au groupe d'utilisateurs (7, 8) dans un message unique (38) indiquant que le canal montant est occupé.

2. Procédé selon la revendication 1, dans lequel l'identifiant et les données indiquant que le canal montant est occupé sont transmis par l'intermédiaire d'une interface radio (13) entre une station de base et le groupe d'utilisateurs (7, 8).

3. Procécé selon la revendication 2, dans lequel l'identifiant et les données indiquant que le canal montant est occupé sont contenus au sein d'un bloc radio sur l'interface radio (13).

4. Procédé selon l'une quelconque des revendications 1 à 3, comprenant la réception d'un message (39A) comprenant l'identifiant.

5. Procédé selon la revendication 4, dans lequel la réception du message (39A) comprenant l'identifiant comprend la réception du message (39A) comprenant l'identifiant à partir d'un centre de commutation mobile (2, 35).

6. Procédé selon la revendication 4 ou la revendication 5, dans lequel le message (39A) comprend un message indiquant que le canal montant est pris.

7. Station de base (12), comprenant :
un moyen pour délivrer des données pour une transmission à un groupe d'utilisateurs (7, 8) dans un réseau au sein d'un service d'appel vocal de groupe, lesdites données indiquant qu'un canal montant est occupé ;
**caractérisée en ce que** la station de base (12) comprend :
un moyen pour ajouter aux données un identifiant d'un nouvel utilisateur actif (41) ; et
un moyen pour faire en sorte que l'identifiant et les données indiquant que le canal montant est occupé soient envoyés au groupe d'utilisateurs (7, 8) dans un message unique (38) indiquant que le canal montant est occupé.

8. Station de base (12) selon la revendication 7, dans laquelle le moyen pour faire en sorte est agencé pour faire en sorte que le message unique (38) soit envoyé par l'intermédiaire d'une interface radio (13) entre la station de base (12) et le groupe d'utilisateurs (7, 8).

9. Station de base (12) selon la revendication 8, dans laquelle le moyen pour faire en sorte est agencé pour faire en sorte que le message unique (38) soit envoyé au sein d'un bloc radio sur l'interface radio (13).

10. Station de base (12) selon l'une quelconque des revendications 7 à 9, comprenant un moyen pour recevoir un message (39A) comprenant l'identifiant.

11. Station de base (12) selon la revendication 10, dans laquelle le moyen pour recevoir un message (39A) comprenant l'identifiant est agencé de façon à recevoir le message (39A) comprenant l'identifiant d'un centre de commutation mobile (2, 35).

12. Station de base (12) selon la revendication 10 ou la revendication 11, dans laquelle le message (39A) comprend un message indiquant que le canal montant est pris.
